**Europäisches Patentamt**

**European Patent Office**

**Office européen des brevets**

(19)

(11) Numéro de publication : **0 303 535 B1**

# (12) FASCICULE DE BREVET EUROPEEN

(45) Date de publication du fascicule du brevet :
**18.03.92 Bulletin 92/12**

(51) Int. Cl.$^5$ : **B23P 15/00**, B23H 9/10

(21) Numéro de dépôt : **88402063.7**

(22) Date de dépôt : **09.08.88**

(54) **Procédé de réalisation d'étages de stator de compresseur ou de turbines, aubes et grilles d'aubes ainsi obtenues.**

(30) Priorité : **12.08.87 FR 8711454**

(43) Date de publication de la demande :
**15.02.89 Bulletin 89/07**

(45) Mention de la délivrance du brevet :
**18.03.92 Bulletin 92/12**

(84) Etats contractants désignés :
**BE CH DE ES FR GB GR IT LI NL SE**

(56) Documents cités :
**EP-A- 0 197 268**
**FR-A- 1 169 926**
**GB-A- 1 116 580**
**NL-C- 15 455**
**US-A- 2 221 722**
**US-A- 3 314 137**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Vosgien, Michel**
**17, rue des Fontenelles**
**F-94000 Créteil (FR)**

(74) Mandataire : **Moinat, François et al**
**S.N.E.C.M.A. Service des Brevets Boîte Postale 81**
**F-91003 Evry Cédex (FR)**

## Description

La présente invention concerne les procédés de fabrication de grilles d'aubes de stator pour les compresseurs ou les turbines des turbomachines ainsi que les produits : grilles, secteurs de grilles ou aubes unitaires ainsi réalisées.

Les étages de redresseurs de stator de compresseurs haute pression, ou encore de turbine sont actuellement réalisés suivant deux procédés.

Selon le premier procédé, les redresseurs sont constitués d'aubes obtenues par découpes de profilés et assemblées en secteurs par brasage dans des viroles poinçonnées. L'usinage des pales est réalisé dans des barres filées dans lesquelles on découpe un tenon. Les viroles, quant à elles, sont formées par roulage puis poinçonnées. L'assemblage est effectué par brasage du tenon dans les découpes de la virole interne et brasage de l'extrémité supérieure de la pale dans les découpes de la virole externe.

Ce procédé présente une certaine simplicité mais a pour inconvénient majeur qu'il ne permet de réaliser que des redresseurs à pales de forme simple à profils cylindriques, c'est à dire dont toutes les génératrices sont parallèles entre elles.

Or les contraintes aérodynamiques que subissent les redresseurs de compresseurs des turbomachines à fort taux de compression et à haut rendement ont amené à vouloir réaliser des pales de redresseur à profil et à corde évolutifs. Ainsi les pales peuvent-elles posséder des extrémités courbées de raccordement avec les viroles interne et externe.

De tels redresseurs ne sont pas susceptibles d'être fabriqués au moyen du procédé précité. Aussi un second procédé de réalisation consiste à mouler à la cire perdue des grilles, ou des secteurs qui seront assemblés entre eux pour former des grilles. Ce procédé, s'il permet de réaliser des pièces complexes, présente tous les inconvénients de la fonderie de précision. Ainsi, il nécessite de réaliser un modèle de la grille ou des secteurs par assemblage de modèles unitaires des pales avec les viroles ou secteurs de viroles interne et externe. A partir de ce modèle est réalisé un moule-carapace par édification de couches successives de céramique et destruction du modèle par fusion, puis par brûlage du moule-carapace. L'alliage est ensuite coulé dans le moule-carapace, qui doit être détruit pour obtenir l'ébauche coulée de la grille ou du secteur. L'ébauche subit ensuite un usinage des portées circulaires, et, dans le cas de secteurs, un usinage des faces latérales pour aboutir à la grille ou au secteur fini.

Ce procédé induit des cycles de fabrication importants (typiquement supérieurs à 8 mois). D'autre part, il met en oeuvre des moyens industriels coûteux (fours de coulée sous-vide, fours de cuisson des moules-carapaces) dont l'investissement ne se justifie que pour des volumes de production élevés.

Par ailleurs, il est déjà connu, par le EP-A- 0 197 268, de réaliser des grilles d'aubes en soudant entre elles des aubes élémentaires munies de pieds et de têtes. A cet effet, sur les parties latérales des pieds et des têtes sont ménagées des gorges destinées à recevoir un cordeau de soudure qui solidarise deux aubes adjacentes. Ce procédé nécessite un mode de positionnement précis et risque de créer des déformations par suite du chauffage important.

La présente invention a pour but de fournir une autre solution pour la réalisation d'étages de redresseurs de compresseurs haute pression, ou de turbine, qui ne mette en oeuvre que des moyens industriels "légers" par rapport à ceux utilisés en fonderie et qui permette de diminuer la durée des cycles de fabrication, en autorisant la fabrication de pales à profil et à corde évolutifs.

L'invention a donc pour objet un procédé qui comporte la combinaison des étapes suivantes :

a) on réalise une barre fraiséeà section en trapèze isocèle dont l'angle au sommet $\alpha$ est égal à $2\pi/n$ où "n" est le nombre d'aubes de la grille à réaliser ;

b) on réalise des ébauches d'aubes par découpage, perpendiculairement au plan de symétrie de la barre, des contours externes de chaque ébauche d'aube prise dans le sens de l'épaisseur, celle-ci étant définie comme la longueur entre le bord amont et le bord aval de la grille à réaliser, lesdits contours comportant les découpes externes des pieds d'aubes ;

c) on usine l'extrados et l'intrados de la pale de chaque aube ;

d) on réalise sur chaque aube ainsi formée des opérations de finition ;

e) on soude bord à bord les pieds et les têtes des aubes pour former un secteur ou une grille complète ;

Il est ensuite possible d'effectuer, de manière connue, des opérations de reprise au tour des portées circulaires en tête et en pied du secteur ou de la grille réalisée.

D'autres particularités du procédé seront détaillées en regard des planches annexées parmi lesquelles :

– la figure 1 montre, schématisée, l'étape a) du procédé,

– la figure 2 montre, schématisée, la découpe des contours des ébauches d'aube par électroérosion au fil, selon, l'étape b), et la figure 2a est un détail agrandi de la barre découpée,

– la figure 3 montre un schéma de l'étape c) suivant un de réalisation,

– la figure 4 illustre l'opération de soudage des aubes 10 entre elles,

– la figure 5 montre un secteur de grille de redresseur réalisé par le procédé,

– la figure 6 montre, vu de l'amont, un secteur de grille avec des aubes à courbure d'extrémité.

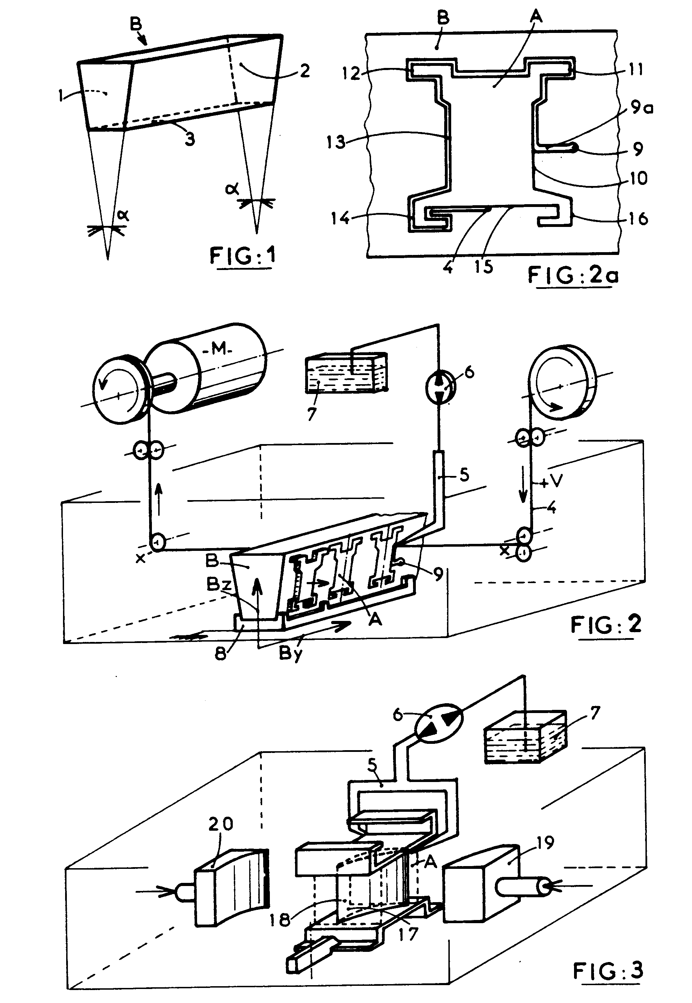

Selon la première étape du procédé (figure 1), on part d'une barre B d'alliage laminée, par exemple d'un superalliage base nickel tel que ceux connus sous les noms commerciaux INCO 718 ou WASPALLOY, sur laquelle on réalise trois faces usinées par fraisage de façon à former une barre de section trapézoïdale isocèle dont les deux faces opposées 1 et 2 forment entre elle un angle au sommet $\alpha$ tel que $\alpha$ est égal à $2\pi/n$ si "n" doit être le nombre des aubes de la grille à réaliser. La petite base 3 de trapèze, qui pourra être la troisième face usinée servira de surface de référence dans les montages d'usinage pour les opérations suivantes du procédé.

Pour que les faces 1 et 2 constituent les surfaces d'assemblage des aubes après leur usinage, la découpe des aubes, plus exactement de leurs contours externes est effectuée perpendiculairement au plan de symétrie de la barre trapézoïdale B au moyen d'une machine à électroérosion à fil. Selon ce principe connu d'usinage (figure 2), on réalise un arc électrique entre le fil outil 4 soumis à un courant électrique de tension +v et de forte intensité et la pièce qui subit ainsi une érosion anodique, un diélectrique liquide, par exemple un composé huileux non conducteur étant projeté sous pression sur la zone de travail par une buse 5 alimentée par une pompe 6 depuis un réservoir 7, les différents paramètres étant fixés par les conditions d'usinage prévues pour l'alliage de pièce choisie. La barre trapézoïdale B est fixée sur un support 8 mobile selon 2 axes orthogonaux By et Bz, appartenant au plan de symétrie de la barre B et dans l'exemple de la figure 2, normal à l'axe x x' de déroulement du fil.

Pour permettre la réalisation de la découpe des contours externes de l'ébauche de chaque aube, le support mobile 8 de la barre B comporte une motorisation pilotée par un micro-processeur dans la mémoire duquel a été inséré le programme des déplacements en y et en z du support afin que la pièce se déplace en fonction des contours à découper par le fil 4.

Si l'on se réfère maintenant à la figure 2a qui montre la barre vue selon l'axe x x', un trou 9 est percé de part en part de la barre B, trou par lequel le fil 4 est engagé au travers de la barre.

Le trou 9 est percé à une distance suffisante du contour à découper pour que pendant le trajet 9a entre le trou 9 d'engagement et le contour proprement dit, les conditions opératoires (avance de la pièce, tension, intensité de courant, pression de diélectrique) se stabilisent de telle sorte que l'état de surface de la découpe au niveau du contour de la pièce A soit correct et répétitif. Dans l'ensemble représenté à la figure 2a, le contour de la pièce à découper comporte l'arête 10 qui formera le bord de fuite de la pale une fois terminée, les contours 11 et 12 qui formeront respectivement les bords aval et amont de la tête de l'aube, l'arête 13 qui formera le bord d'attaque de la pale ainsi que les contours 14,15,16 qui formeront respectivement le bord amont, la rainure interne et le bord aval du pied d'aube, la rainure interne 15 ayant pour fonction de servir à maintenir un support d'abradable sur la grille de redresseur qui sera réalisée.

La découpe par électro-érosion au fil permet, une fois les conditions opératoires stabilisées au cours du trajet 9a, de travailler à cotes finies, notamment au niveau des contours 11,12 de la tête et 14,15,16 du pied de l'aube.

L'ébauche d'aube A ayant été entièrement découpée peut être extraite de la barre et possède à cet instant une forme découpée aux contours externes de l'aube, mais avec encore une section trapézoïdale.

L'opération suivante (figure 3) consiste à usiner dans la masse de cette section l'intrados 17 et l'extrados 18 de la pale. Ceci est effectué en disposant la pièce dans la cuve d'une machine d'usinage à électroérosion dont l'outil aura une forme conjuguée de celle (intrados ou extrados) à réaliser sur la pale.

Les deux opérations d'usinage d'intrados et d'extrados pourront être effectuées l'une après l'autre, ou bien encore simultanément par deux électrodes 19,20 travaillant en opposition de part et d'autre de l'ébauche ainsi que cela est schématisé à la figure 3.

Eventuellement cette étape d'usinage peut être effectuée par usinage électrochimique, dans des conditions opératoires connues en elles-mêmes pour ce mode d'usinage.

Des opérations de finition de l'aube obtenue après usinage des faces de la pale sont ensuite effectuées. Ces opérations comprennent un ajustage du bord d'attaque et du bord de fuite au moyen de toile abrasive en bande tournant sans fin ou à la meule ainsi qu'un tonnelage des pièces qui en assure l'ébavurage. Une attaque chimique de durcissage superficiel peut également être effectué à ce stade.

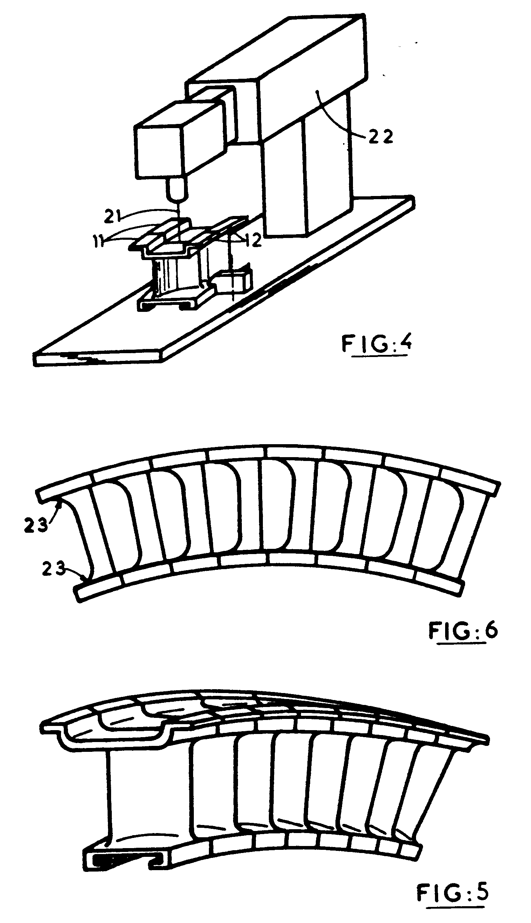

Les aubes unitaires ainsi réalisées sont ensuite assemblées par paires ou par secteurs et sont soudées bord à bord des têtes d'aubes formant la virole externe du secteur sur un poste de soudage par exemple par faisceau d'énergie 21 au moyen par exemple d'un laser YAG 22 (figure 4), qui présente l'intérêt d'une grande précision de réglage autorisant une parfaite reproductibilité de la soudure et qui est bien adapté au soudage bord à bord sans apport de métal. Ce type de soudage induit de faibles déformations dans les pièces à assembler en raison de l'échauffement limité qu'il leur occasionne.

Si l'on dispose d'un poste de soudure par faisceau d'électrons sous vide d'air, cette technique peut également être utilisée en lieu et place du soudage laser.

Une dernière opération consistera à effectuer une reprise en tournage des portées circulaires en tête et en pied sur les grilles de redresseurs assemblées.

Les secteurs ainsi réalisés sont représentés aux figures 5 et 6. A la figure 6 est montré un type particulier d'aubage sur lequel porte également l'objet de l'invention. Ces aubages comportent pour des raisons aérodynamiques des courbures d'extrémité 23 de raccordement avec la tête et le pied de l'aube et peuvent également comporter un profil de section évolutif sur la longueur de la pale. L'invention porte également sur les grilles d'aubes complètes qui sont réalisées comme indiqué ci-dessus.

Le procédé qui vient d'être explicité permet une réduction des cycles de fabrication qui diminuent de 4 à 6 mois par rapport à ceux des procédés actuellement utilisés. Il s'adapte en outre parfaitement bien à des séries moyennes car il ne met pas en oeuvre des moyens industriels lourds.

## Revendications

1. Procédé de réalisation de grilles d'aubes de redresseur de stator de compresseur ou de turbine de turbomachine caractérisé en ce qu'il comporte les étapes suivantes :

a) on réalise une barre fraisée B à section en trapèze isocèle dont l'angle au sommet $\alpha$ est égal à $2\pi/n$ ot "n" est le nombre d'aubes de la grille à réaliser ;

b) on réalise des ébauches d'aubes A par découpage, perpendiculairement au plan de symétrie de la barre, des contours externes (10 à 16) de chaque ébauche d'aube A prise dans le sens de l'épaisseur, celle-ci étant définie comme la longueur entre le bord amont et le bord aval de la grille à réaliser, lesdits contours comportant les découpes externes des pieds d'aubes (11,12 ; 14,15,16) ;

c) on usine l'extrados (18) et l'intrados (17) de la pale de chaque aube ;

d) on réalise sur chaque aube ainsi formée des opérations de finition ;

e) on soude bord à bord les pieds et les têtes des aubes pour former un secteur ou une grille complète;

2. Procédé selon la revendication 1 caractérisé en ce que la découpe des contours externes de chaque ébauche d'aube est effectuée par électroérosion.

3. Procédé selon la revendication 2, caractérisé en ce que la découpe des contours externe est effectuée par une machine à électroérosion à fil-outil (4).

4. Procédé selon l'une des revendications 1 à 3 caractérisé en ce que la découpe des contours externes est effectuée à cotes finies.

5. Procédé selon l'une quelconque des revendications 1 à 4, caractérisé en ce que l'usinage de l'intrados (17) et de l'extrados (18) de chaque pale d'aube est effectué par électroérosion.

6. Procédé selon l'une quelconque des revendications 1 à 4, caractérisé en ce que l'intrados (17) et l'extrados (18) de chaque pale d'aube sont réalisés par usinage électrochimique.

7. Procédé selon l'une quelconque des revendications 1 à 6, caractérisé en ce que les opérations de finition de chaque aube comprennent un ajustage à la meule des bords d'attaque et de fuite de la pale et une opération de tonnelage.

8. Procédé selon l'une quelconque des revendications 1 à 7, caractérisé en ce que le soudage des aubes entre elles est effectué par faisceau d'énergie (21).

## Claims

1. Process for producing arrays of flow-straightening blades for turboshaft engine compressor or turbine stators characterized in that it comprises the following steps:

a) a machined bar B is produced with an isosceles trapezoidal section of which the angle at the apex a is equal to $2\pi/n$ where "n" is the number of blades in the array to be produced;

b) blade blanks A are produced by cutting from the bar at right angles to its plane of symmetry the external contours (10 to 16) of each blade blank A, taken in the sense of thickness, this being defined as the length between the upstream edge and the downstream edge of the array to be produced, the said contours comprising the external cut-outs of the blade shanks (11, 12 ; 14, 15, 16);

c) the suction (18) and pressure (17) faces of the aerofoil section of each blade are machined;

d) finishing operations are carried out of each blade thus produced;

e) the shanks and heads of the blades are welded together to form a complete segment or array.

2. Process in accordance with Claim 1, characterized in that the cutting out of the external contours of each blade blank is carried out by electro-erosion.

3. Process in accordance with Claim 2 characterized in that the cutting out of the external contours of each blade blank is carried out by a wire electro-erosion machine (4).

4. Process in accordance with one of Claims 1 to 3, characterized in that the cutting out of the external contours is carried out to finished dimensions.

5. Process in accordance with one of Claims 1 to 4, characterized in that the machining of the pressure face (17) and suction face (18) of each aerofoil section of the blade is carried out by electro-erosion.

6. Process in accordance with one of Claims 1 to 4, characterized in that the machining of the pressure face (17) and suction face (18) of each aerofoil section of the blade is carried out by electro-chemical machining.

7. Process in accordance with any one of Claims 1 to 6, characterized in that the finishing operations for each blade comprise an adjustment by grinding of the leading and trailing edges of the aerofoil and a tumbling operation.

8. Process in accordance with any one of Claims 1 to 7, characterized in that the welding together of the blades is carried out by energy beam (21).

**Patentansprüche**

1. Verfahren zur Herstellung von Stator-Leitschaufelgittern für Verdichter oder Turbinen von Turbomaschinen, gekennzeichnet durch folgende Verfahrensschritte:

(a) man stellt einen gefrästen Stab B her, dessen Querschnitt die Form eines gleichschenkligen Trapezes hat, dessen Scheitelwinkel $\alpha$ gleich $2\pi/n$ ist, wobei "n" die Anzahl der Schaufeln des herzustellenden Gitters bedeutet,

(b) man stellt Schaufelrohlinge A her, indem man senkrecht zur Symmetrieebene des Stabes die Außenkonturen (10 bis 16) jedes Schaufelrohlings A in Dickenrichtung schneidet, wobei die Dicke definiert ist als die Länge zwischen dem stromaufwärtigen und dem stromabwärtigen Rand des herzustellenden Gitters und wobei die genannten Konturen die Außenzuschnitte der Schaufelfüße (11, 12; 14, 15, 16) umfassen,

(c) man bearbeitet die Wölbungsaußenseite (18) und die Wölbungsinnenseite (17) der einzelnen Schaufelblätter,

(d) man führt an jeder so gewonnenen Schaufel Fertigbearbeitungen durch,

(e) man schweißt die Füße und die Köpfe der Schaufeln Rand an Rand zusammen, um einen Sektor oder ein vollständiges Gitter herzustellen.

2. Verfahren nach Anspruch 1, dadurch gekennzeichnet, daß das Schneiden der Außenkonturen der einzelnen Schaufelrohlinge durch Elektroerodieren erfolgt.

3. Verfahren nach Anspruch 2, dadurch gekennzeichnet, daß das Schneiden der Außenkonturen mittels einer Elektroerodiermaschine mit Werkzeugdraht (4) durchgeführt wird.

4. Verfahren nach einem der Ansprüche 1 bis 3, dadurch gekennzeichnet, daß das Schneiden der Außenkonturen mit Endmaßen durchgeführt wird.

5. Verfahren nach einem der Ansprüche 1 bis 4, dadurch gekennzeichnet, daß die Bearbeitung der Wölbungsinnenseite (17) und der Wölbungsaußenseite (18) jedes Schaufelblatts durch Elektroerodieren erfolgt.

6. Verfahren nach einem der Ansprüche 1 bis 4, dadurch gekennzeichnet, daß die Wölbungsinnenseite (17) und die Wölbungsaußenseite (18) jedes Schaufelblatts durch elektrochemische Bearbeitung hergestellt werden.

7. Verfahren nach einem der Ansprüche 1 bis 6, dadurch gekennzeichnet, daß die Fertigbearbeitung jeder Schaufel ein durch Schleifen der Vorder- und Hinterkante der Schaufel durchgeführtes Justieren und einen Trommelungsvorgang umfaßt.

8. Verfahren nach einem der Ansprüche 1 bis 7, dadurch gekennzeichnet, daß das Zusammenschweißen der Schaufeln mit Hilfe eines Energiestrahls (21) durchgeführt wird.

FIG:1

FIG:2a

FIG:2

FIG:3

FIG:4

FIG:6

FIG:5